(19)

Europäisches
Patentamt
European
Patent Office
Office européen
des brevets

(11) **EP 2 934 052 A1**

(12) **EUROPEAN PATENT APPLICATION**

(43) Date of publication:
**21.10.2015  Bulletin 2015/43**

(51) Int Cl.:
***H04W 64/00*** (2009.01)   ***G01S 5/02*** (2010.01)

(21) Application number: **14305563.0**

(22) Date of filing: **16.04.2014**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
 • **Dashti, Marzieh**
  **DUBLIN (IE)**

</td><td>

 • **Claussen, Holger**
  **DUBLIN (IE)**

(74) Representative: **Therias, Philippe**
**Alcatel-Lucent International**
**148/152 route de la Reine**
**92100 Boulogne-Billancourt (FR)**

Remarks:
Amended claims in accordance with Rule 137(2) EPC.

</td></tr>
</table>

(54) **Method, base station, system and computer-readable medium to localize a user device**

(57)     A method and system to localize a user device, the user device is located in the vicinity of at least one base station of a wireless network, the localization method comprises a step of estimating at least one channel impulse response of a propagation channel between the user device and the base station. The method also comprises a step of determining a predetermined channel impulse response, included in a database, that most likely corresponds with the estimated channel impulse response, the determination is made using a pattern matching techniques and each predetermined channel impulse response is associated with a location. The method also comprises a step of estimating the location of the user device as being the location associated with the predetermined channel impulse response

Figure 1

# Description

## FIELD OF INVENTION

The present subject matter relates to the determination of the location of a user device or user equipment (UE) located under the coverage or at least in the vicinity of a base station of a wireless network.

## BACKGROUND

Operators are planning to deploy hundreds of thousands of small cells widespread, in order to increase the capacity in locations or hotspots where the wireless connection is much demanded. The aim of these small cells is to offload the macro cells used to coverage the hotspot. One of the main challenges for operators is to identify the optimum location to deploy the small cell, in order to achieve the best small cell's performance in terms of offload and coverage. For this purpose, operators need maps of traffic demand intensity and received signal strength indicators (RSSI) of existing cells. The coverage area of a small cell is typically in range of 100m or less in co-channel deployments, hence, a small cell that is deployed tens of meters away from its optimal location not only fails to offload the traffic from targeted demand hotspots but it may also cause additional interference to users in this hotspot. Therefore, the accuracy of the location of demand hotspots needs to be accurate to tens of meters.

## SUMMARY

This summary is provided to introduce concepts related to reception and transmission of the location of a user device situated under the coverage or at least in the vicinity of a base station of a wireless network.

In one implementation, a method to localize a user device is described. The user device is located in the vicinity of at least one base station of a wireless network. The localization method comprises:

a step of estimating at least one channel impulse response of a propagation channel between the user device and the base station,
a step of determining a predetermined channel impulse response, included in a database, that most likely corresponds with the estimated channel impulse response , the determination is made using a pattern matching techniques and each predetermined channel impulse response is associated with a location,
a step of estimating the location of the user device as being the location associated with the predetermined channel impulse response.

In another implementation a base station is described. The base station comprises at least one processor and at least one memory coupled to the processor. The memory comprising a first estimation module configured to the estimation of at least one channel impulse response of a propagation channel between a user device and the base station, a determination module configured to the determination of a predetermined channel impulse response, included in a database, that most likely corresponds with the estimated channel impulse response , the determination is made using a pattern matching techniques and each predetermined channel impulse response is associated with a location, and a second estimation module configured to the estimation of the location of the user device as being the location associated with the predetermined channel impulse response.

In another implementation a system to localize a user device is described. The system comprises at least one base station comprising at least one first processor and at least one first memory coupled to the first processor and a core network device comprising at least one second processor and at least one second memory coupled to the second processor. The first memory comprises a first estimation module configured to the estimation of at least one channel impulse response of a propagation channel between the user device and the base station. The second memory comprises a determination module configured to the determination of a predetermined channel impulse response, included in a database, that most likely corresponds with the estimated channel impulse response, the determination is made using a pattern matching techniques and each predetermined channel impulse response is associated with a location. The second memory also comprises a second estimation module configured to the estimation of the location of the user device as being the location associated with the predetermined channel impulse response.

In another implementation a computer-readable medium having embodied thereon a computer program for executing a method to localize a user device. The user device is located in the vicinity of at least one base station of a wireless network. The localization method comprises:

a step of estimating at least one channel impulse response of a propagation channel between the user device and the base station,
a step of determining a predetermined channel impulse response, included in a database, that most likely corresponds with the estimated channel impulse response , the determination is made using a pattern matching techniques and each predetermined channel impulse response is associated with a location,
a step of estimating the location of the user device as being the location associated with the predetermined channel impulse response.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates a first exemplary embodiment of the localization method.

Figure 2 illustrates a second exemplary embodiment of the localization method.

Figure 3 illustrates a third exemplary embodiment of the localization method.

Figure 4 illustrates a fourth exemplary embodiment of the localization method.

Figure 5 illustrates how the fourth exemplary embodiment allows an improvement of the localization method.

Figure 6 illustrates a fifth exemplary embodiment of the localization method.

Figure 7 illustrates a system implementing the method of this subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

To obtain a map of traffic load in the hotspots and the RSSI of the underlay macrocells, the localization or geo-localization of the user devices is needed.

In order to do this localization, the so-called Global Navigation Satellite System (GNSS) can be used. This type of system easily meets the localization accuracy needed to obtain a map of traffic load hotspots. However, the regular user devices do not report location information, derived from GNSS system, back to the network. Indeed this is not a capability specified in 3GPP standards for cellular networks currently being deployed. The currently deployed 3GPP standard is the LTE Release 8. The LTE Releases 10 and 11 include the reporting of GNSS information, as part of the so called Minimization of Drive Tests (MDT) feature. However, even in the LTE releases 10 and 11, the invocation of the feature MDT by a user device, is also dependent on user permission. Furthermore, given the concerns regarding the privacy of users, consent for detailed GNSS location information may not be made as widely available to the operator, unless the users are given some form of compensation. Using GNSS in MDT mode also has implications on the battery life of the user device, so prolonged use of this MDT feature is not desirable.

In order to do the localization of the user devices, different measurements (RF-fingerprints) can be used. These measurements can be collected by the base stations (BSs), by the user devices or by other parts of the network.

For example in order to do this localization, the geographical knowledge of the user device serving cell can be used. This type of positioning is based on the Cell-ID (CID) and/or Enhanced Cell-ID (ECID) information. Cell-ID and the Enhanced Cell-ID give information related to the current base station (or cell) that serves the user device. Typically basic CID positioning provides only coarse estimation of the user device location, with accuracy of roughly the same order as the cell radius. When using ECID, this ECID information could also be completed with additional measurement reports such as Angle of Arrival (AoA) measurements or Reference Signal Received Power (RSRP) measurements. AoA measurements are only reliable if suitable antenna arrays are deployed. The user devices may be configured to perform RSRP measurements for the serving cell and for the neighboring cells. Using the RSRP measurements, the distance between the user device and the cell can be known using path loss estimation. Given the user device distances from at least three cells, the location of the user device can be calculated using triangulation techniques. The accuracy of this approach tends to be low, as accurately estimating the path loss is difficult in the presence of obstacles in the environment of the user device. These obstacles could be for example buildings and variations introduced by antenna gain patterns and configurations. In general, the accuracy of this approach is low, with an accuracy level of 400-1000m. As mentioned previously, this level of accuracy is not sufficient for planning the deployment of small cells.

Another method for calculating location of the user device is to use time delay measurements and more precisely Observed Time Difference of Arrival (OTDOA).

The prerequisite of OTDOA technique is to obtain timing delay measurements from multiple cells (at least three). This can be done by measuring the time difference between some specific signals from several cells or base stations and reports these time differences to a specific device in the network (for example the ESMLC for Enhanced Serving Mobile Location Center). However this method is not suitable for each wireless network system, because the user devices have to be connected to multiple cells at a time. Inside the LTE networks, the user devices can only be connected to one cell at a time. As a result, timing information is only available for the single serving cell in LTE, and hence time-based positioning technique cannot be used to provide accurate positioning information. Inside the networks that allow the connection of a user device to several cells of base stations, as in UMTS networks, the accuracy of the location is limited to around 100m today.

Another method of estimating the location of the user device is realized by comparing the RSSI, reported by the user device from multiple cells or base stations, with a RSSI map, so called an RF fingerprint map or fingerprint database. The RF fingerprint map contains located RSSI measurements from multiple base stations (also called fingerprint vector), and a user device is located at the fingerprint that matches its measured RSSI. The precision of the estimated location depends on the accuracy of the fingerprint map.

In cellular networks, each cell or base station has a range of coverage of up to a few kilometers. Therefore, estimating the location of the user device based on the measurements from multiple base stations, where each base station contributes only one dimension to the fingerprint vector, is challenging. In addition, in certain type of networks, for example in the LTE networks, the measurement from multiple base stations may not be available.

When using fingerprint technology, the measured radio signals of multiple base stations (fingerprint vector) are recorded at multiple known positions and a radio map (fingerprint database) is constructed during an off-line training phase. In online phase, the user device measures the radio signals from multiple base stations and these radio signals are compared with the fingerprints recorded in the database. The user devices is located at the fingerprint that matches the best these radio signal measurements. The fingerprint technique mitigates non line-of-sight (NLoS) effects, and hence can provide accurate positioning information for small cell planning.

In common fingerprint methods, each cell only contributes in one dimension (signal strength, RSSI) of the fingerprint vector. As each macro cell has a coverage area of few kilometers, hence it is hard to distinguish locations with the resulting low-dimension fingerprint vectors. The localization accuracy can be improved by increasing the number of base stations, then in an area where there are a limited number of base stations, the localization is challenging.

In LTE, the user devices can be configured to perform RSRP measurements for the serving cell and the neighboring cells. The measurement reporting mechanism can be periodic and/or event-triggered. The number and type of reporting criteria are configured by the network and can be based on any of the three reporting mechanism. Hence the number of reporting RSRP from neighbor cells is unreliable. The accuracy of common RF fingerprint positioning reduces where the RSRP measurements are available only from small number of base stations.

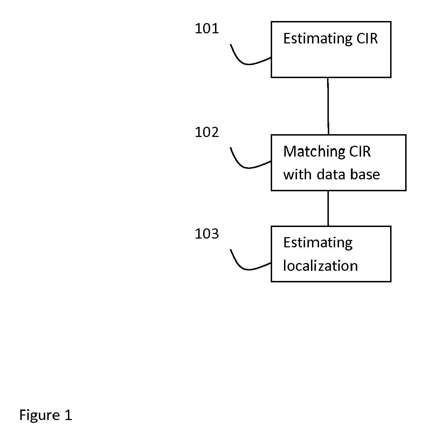

Figure 1 presents an embodiment of the present subject matter. This embodiment describes a method to localize a user device. The user device is located in the vicinity of at least one base station of a wireless network. The localization method comprises a step 101 of estimating at least one channel impulse response of a propagation channel between the user device and the base station. The method also comprises a step 102 of determining a predetermined channel impulse response, included in a database, which most likely corresponds with the estimated channel impulse response. The determination is made by using a pattern matching technique. Each predetermined channel impulse response is associated with a location. Lastly, the method comprises a step 103 of estimating the location of the user device as being the location associated with the predetermined channel impulse response.

In other words, this embodiment consists in an enhanced fingerprint positioning method, which relies only on one base station and increases accuracy of the localization, by exploiting detailed channel information and time traces of measurements to significantly increase accuracy compared to the previously presented methods.

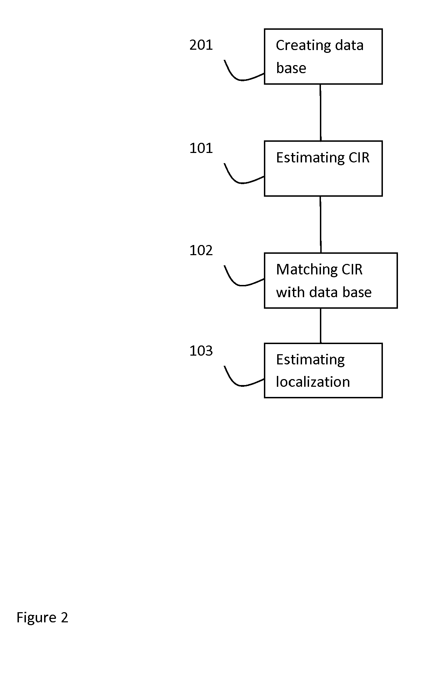

Figure 2 presents another embodiment of the localization method. The method according to this embodiment comprises a further step 201 of creating the data base. This creation can be done:

- by performing in-field measurements of the channel impulse response in at least one point of the coverage area of the base station

- and/or by modeling the predetermined channel impulse responses using ray tracing techniques

- and/or by determining the channel impulse response in at least one point of the coverage area of the base station. This determination is realized by one of the user devices and after that the determined channel impulse response is transmitted to the base station.

In other words, one way to construct fingerprint database is to perform drive testing, where engineers are sent out to the field with specialized measurement device. This process, however, is costly and slow and needs to be repeated whenever any changes to the environment or to the cellular network such as new cells or base stations are added or when changes to antenna and transmit powers are made. A second possibility is to use channel modeling to generate the fingerprint database. For example, the channel impulse response could be based on ray-tracing techniques used by the Alcatel-Lucent tool called WiSE or based on recent waveguide-diffusion channel models.

The WiSE tool is described in the article "WiSE Design of Indoor Wireless Systems: Practical Computation and Optimization" published in IEEE Computational Science and Engineering in March 1995 by S. J. Fortune, D. H. Gay, B. W. Kernighan, O.Landron, M. H. Wright, R.A. Valenzuela. This WiSE tool is also described in the article "Comparisons of a Computer-Based Propagation Prediction Tool with Experimental Data Collected in Urban Microcellular Environments." Published in the number 4 volume 15 of the IEEE Journal on Select Areas in Communication, in May 1997 by V. Erceg, S. J. Fortune, J. Ling, A. J. Rustako, R. A.Valenzuela.

The waveguide-diffusion channel models is described in the article "Radio Wave Diffusion Indoors and Throughput Scaling with Cell Density" published in IEEE Trans. on Wireless Communications in September 2012 by D. Chizhik, J. Ling, R.A.Valenzuela. The waveguide-diffusion channel models is also described in the article "Propagation Over Parabolic Terrain: Asymptotics And Comparison To Data" published in IEEE Transactions on Antennas and Propagation in June 2010 by D. Chizhik, L. Drabeck, W. M. MacDonald. Finally the waveguide-diffusion channel models is also described in the article "Propagation over Clutter: Physical Stochastic Model" published in the volume 56 number 4 pages 1071 to 1077 of IEEE Transactions on Antennas and Propagation in April 2008 by D. Chizhik and J.Ling.

Alternatively the fingerprint data base can be constructed using crowdsourcing using an application on the mobile which reports GPS locations, which are then matched to the channel impulse responses measured at the base station.

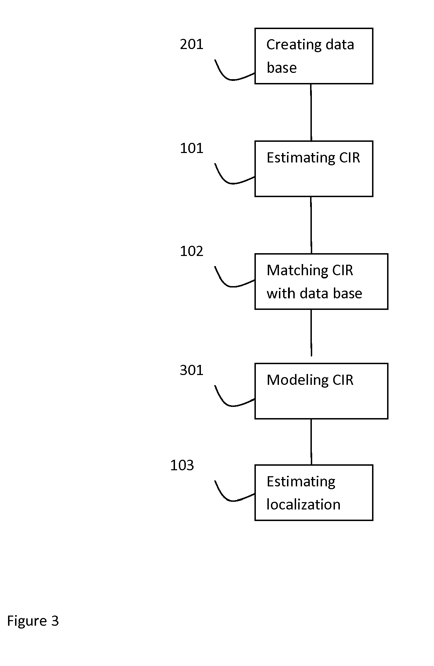

Figure 3 presents another embodiment of the localization method. The method, according to this embodiment, comprises a further step 301 of modeling the predetermined channel impulse response by a predetermined number of received paths. At least one path is characterized by a time delay, a magnitude and/or a phase.

In other words, the channel impulse response completely characterizes the multipath propagation channel and preserves the location dependency, so it is a good choice as a location fingerprint. During the offline training phase, the channel impulse response vectors are collected by the serving cell at N different training locations. The channel impulse response at the n-th training location can be represented using the equation

$$\sum_{l=1}^{L} \rho_l\, e^{j\varphi_l}\, \delta(t - \tau_l),$$ where $L$ is the number of received paths, $\tau_l$ is the time delay of the $l$-th multipath element, and $\rho_l e^{j\varphi_l}$ is the complex amplitude (magnitude $\rho_l$ and phase $\varphi_l$) of the received path $l$.

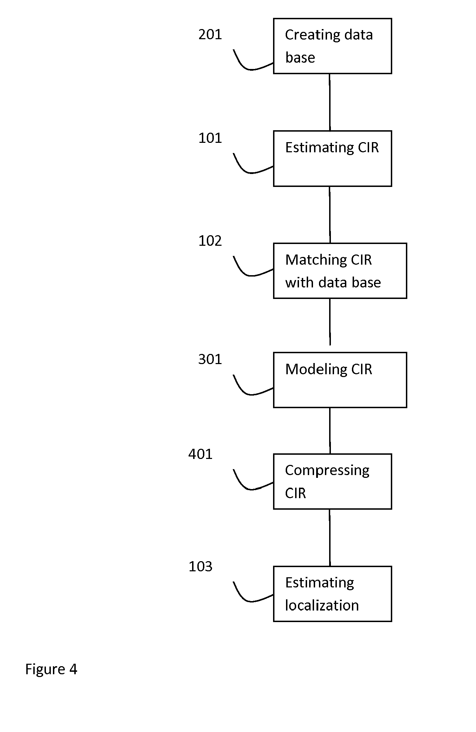

Figure 4 presents another embodiment of the localization method. The method, according to this embodiment, comprises a further step 401 of compressing the model by deleting less relevant received paths and/or by considering only more relevant received paths.

In other words, to reduce the size of the channel impulse response database, only the more relevant multipath elements (for example those with smaller delays) can be stored in the database. The more elements the fingerprint contains, the more complex is the matching technique.

Under pure line-of-sight (LoS) propagation conditions, the first arrived path can be treated as the direct line-of-sight path. The direct line-of-sight path contains more information about the location. Hence in the matching process, first arrived path can be weighted more than other multipath elements with larger delays. In severe multipath environments and especially in non-light-of-sight (NLOS) conditions, the first arriving path may not correspond to the direct path and includes an additional detouring delay. Multipath elements with very larger delays experience more bounces and reflections and they are noisier. Moreover, because of propagation path loss these late multipath components are weaker. These late multipath components contribute less in location estimation and can be weighted less in matching process.

The database structure is shown in table below. In this table, the number of recorded received path at the first training location$(x_1,\ y_1)$ is assumed $L_1$ and the number of recorded received path at the $N$-th training location $(x_N,\ y_N)$ is assumed $L_N$, which can be unequal or equal to $L_1$.

| $(x_1, y_1)$ | Cell ID | $\rho_1$ | $\varphi_1$ | $\tau_1$ |
| | | : | | |
| | | $\rho_{L_1}$ | $\varphi_{L_1}$ | $\tau_{L_1}$ |
| : | : | : | | |
| | | $\rho_1$ | $\varphi_1$ | $\tau_1$ |
| $(x_N, y_N)$ | Cell ID | : | | |
| | | $\rho_{L_N}$ | $\varphi_{L_N}$ | $\tau_{L_N}$ |

In linear scale, the multipath elements with larger delays contribute less to location estimation due to propagation path loss. For the multipath elements to contribute fairly to location estimates, the amplitudes can be transformed to the logarithmic scale.

In an embodiment, the determination of a predetermined channel impulse response is also configured to compare the estimated channel impulse response with only a subset of the database. The subset of the database is determined using an identification of at least one neighbor cell and/or a received power of a reference signal transmitted by at least one neighbor cell.

In other words, in this embodiment, the method relies only on one base station channel impulse response. However in addition to the channel impulse response of the only serving cell (associated to a Cell ID), the RSRP and/or the Cell ID of the neighbor cells can be used too. The RSRP measurements and the Cell ID can limit the channel impulse response database searching area.

In an embodiment a firmware modifications is made in the base stations to reveal the channel estimation result which is required for using the present subject matter.

In an embodiment the step 102 of determining a predetermined channel impulse response is also configured to use previous location of the user device and previously estimated channel impulse responses.

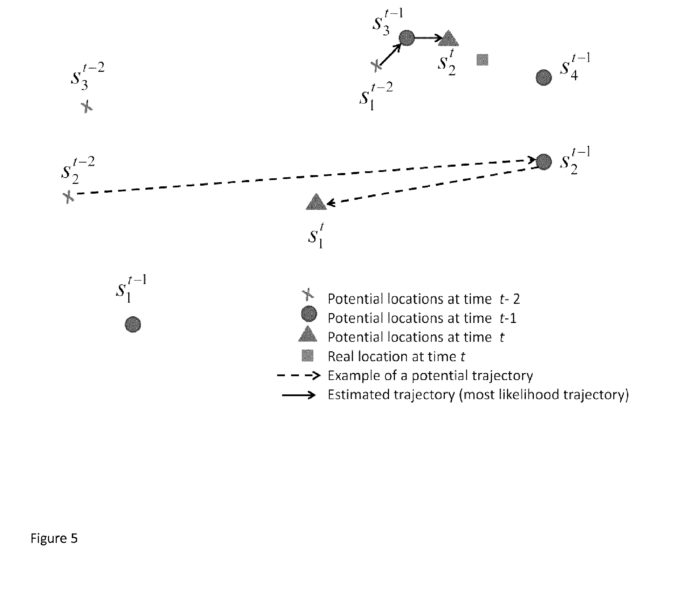

In other word in order to enhance the localization accuracy, we keep record of the time-history measurements of the user device and we correct the location estimate over time using this time-history measurements. The figure 5 illustrates the principle behind the idea.

Figure 5 illustrates an example of a user device trajectory at three continuous time-stamps. At time t, two predetermined channel impulse responses are found to be the best match to the estimated channel impulse response. Assume that s represents a potential state or location at a specific time where s is a two dimensional location s = ($x$, y). In this example, the two potential locations at time t, associated respectively with the two predetermined channel impulse response, are $s_1^t$ and $s_2^t$. We define the state vector at time t as $\overline{S_t} = \{s_1^t, s_2^t\}$. To find the

most likelihood location, we keep the record of previous time estimation of the channel impulse response measurements. Given the estimated channel impulse response at time $t$ - 1, four fingerprints or predetermined channel impulse responses are found as matching entries with the estimated channel impulse response. Each of the four predetermined channel impulse responses are associated with a location and these four locations are combined in a state vector at time $t - 1$, $\overline{S_{t-1}} = \{s_1^{t-1}, s_2^{t-1}, s_3^{t-1}, s_4^{t-1}\}$. To increase the level of confidence, we again look back at the measurement prior than $t$ - 1. Similarly potential locations at time-stamp $t$ - 2 is estimated as $\overline{S_{t-2}} = \{s_1^{t-2}, s_2^{t-2}, s_3^{t-2}\}$.  Here we can find all the possible realization paths that connect $\overline{S_{t-2}}$, $\overline{S_{t-1}}$ and $\overline{S_t}$. Figure 5 shows example of two possible trajectories.

The time interval between the measurements ($\Delta t$) is constant and very short, for example $\Delta t$ =1ms where $\Delta t = |t - (t - 1)| = |(t - 1) - (t - 2)|$. We can assume that the velocity of the user device remains constant during these time intervals and consequently the distance that user device travels is assumed constant. This distance d is obtained using the equation, $d = ||s_t - s_{t-1}|| = ||s_{t-1} - s_{t-2}||$ where $s_{t-2}$, $s_{t-1}$ and $s_t$ are the realization of $\overline{S_{t-2}}$, $\overline{S_{t-1}}$ and $\overline{S_t}$ respectively.

Here, we consider static or slow moving users. For slow mobility users, we can assume that user velocity is constant during measurement time interval $\Delta t$, and hence the distance the user travels in $\Delta t$ is also assumed constant. By distance constant we mean that the distances travel during two different time intervals is constant. i.e., the distance the user travels between times t - 2 and t - 1 is equal to the distance user travels in between times t - 1 and t. This is realized because velocity is constant (c is constant) and measurement time interval $\Delta t$ is constant, hence the distance travel in between two measurement time interval is constant. i.e., d = $||s_t - s_{t-1}|| = ||s_{t-1} - s_{t-2}||$ is constant.

The 3GPP specification reference TS36.331 (RRC specification) describes mobility state estimation (MSE) for user devices or user equipment in RRC_CONNECTED mode. The user device counts number of cell reselection or handovers which occur within a defined period, excluding consecutive reselections or handovers between the same two cells. The user device detects its own mobility state based on the number of handovers. The user device speed is categorized by a mobility state (high, medium or low).

Here we find the realization of $\overline{S_{t-2}}$, $\overline{S_{t-1}}$ and $\overline{S_t}$ such that it maximizes the likelihood of the joint probability of $p = (\overline{S_{t-2}}, \overline{S_{t-1}}, \overline{S_t})$ subject to the constant d. In the example of the figure 5, $p$ is maximum when the estimated location at time-stamps $t$ - 2, $t$ - 1 and t are respectively $s_1^{t-2}$, $s_3^{t-1}$ and $s_2^t$. The estimated trajectory is shown in the figure 5. As shown in this figure, keeping the record of trajectory measurements, the most probable location at time t is chosen to be $s_2^t$ which the closest match to its real location.

In this example, three time measurements are taken into account. With taking more time-measurements, the accuracy increases with the cost of increasing complexity and algorithm running time. However, as user device speed may change over time, the very old measurement need to be discarded as an algorithm input, because they are not realized when the user device is at the same speed as the current speed of the user device.

Measurement buffer can be automatically be updated by storing expiry times for the measurements.

In an embodiment of the method, after the user device location at time t, is corrected using the previously described method, it can be used to limit the database searching area at the next time-stamps.

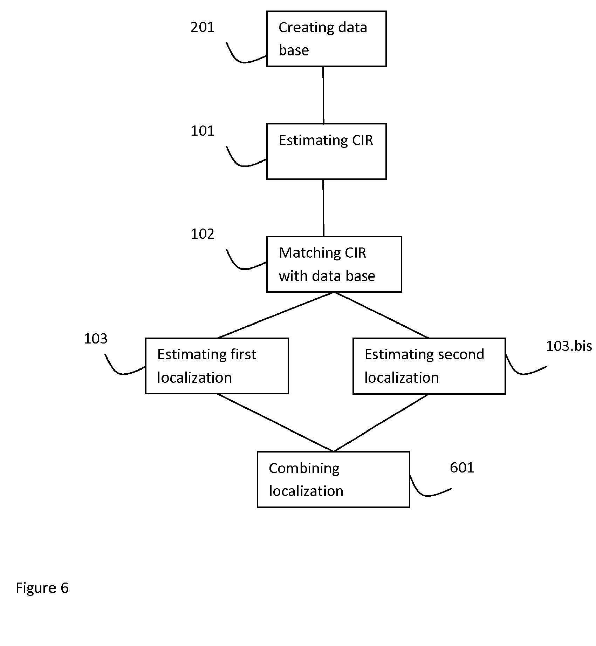

In an embodiment presented figure 6, the step 102 of determining a predetermined channel impulse response is also configured to determine at least two predetermined channel impulse responses. The localization method also comprised a step 601 of combining together at least two of the location associated with the predetermined channel impulse responses.

In other words, if the matching entries locations are very close to each other, the K-nearest-neighbour (KNN) scheme can return the location estimate as the average of the location associated to the K nearest predetermined channel impulse responses. These locations are weighted by the reciprocal of the Euclidean distance between the estimated channel impulse response and the predetermined channel impulse responses.

In an embodiment over time, the trajectories of different user devices can be estimated and recorded. It is likely that user devices move along similar paths in popular areas. The recorded trajectories can give the statistics of user device popular paths in such areas and can help to predict future location of user devices. It also can help to identify key points on the map such as street corners.

In an embodiment the localization method comprises a further step of updating the predetermined channel impulse responses database with a new entry which is the user device estimated channel impulse response associated with its estimated location. This step of updating the data base is realized once the user device location is estimated.

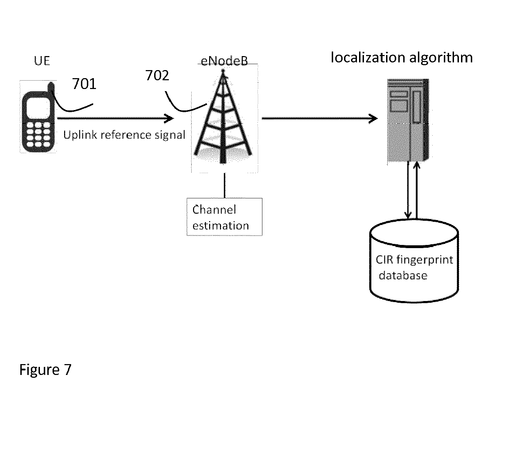

The figure 7 presents a system using the different embodiments described above. In this system, the user device 701 transmits an uplink reference signal to the base station 702. This base station is also known as eNodeB in the LTE standard. There are two types of reference signals, that can be used as an uplink signal, in the LTE standard:

The first is the so called Demodulation Reference Signals which are used to enable coherent signal demodulation at the eNodeB.

The second is the so called Sounding Reference Signal which is used to allow channel dependent uplink scheduling.

The base station or eNodeB estimates channel impulse response using these reference signals.

In this system, after the estimation of the channel impulse response, the localization algorithm searches, inside the database of the predetermined channel impulse response, to find the best matching entries to the estimated channel impulse response. Each of the predetermined channel impulse response in the database is labeled or associated with a geo-location or location information. The user device location is estimated based on the location associated with the best matching channel impulse response. The K-nearest neighbor (KNN) algorithm, presented above, can be used to estimate the user device location.

This localization algorithm could be implemented at the base station side, at the core network or at the cloud.

An embodiment comprises a base station comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The memory includes different modules. These modules comprise a first estimation module adapted to the estimation of at least one channel impulse response of a propagation channel between the user device and the base station. The modules also comprise a determination module adapted to the determination of a predetermined channel impulse response, included in a database, which most likely corresponds with the estimated channel impulse response, the determination is made using a pattern matching techniques and each predetermined channel impulse response is associated with a location. Finally the modules comprise a second estimation module adapted to the estimation of the location of the user device as being the location associated with the predetermined channel impulse response.

In an embodiment the memory also comprises a modelization module configured to model the predetermined channel impulse response by a predetermined number of received paths, at least one path is characterized by a time delay a magnitude and/or a phase, and eventually a compression module configured to compress the model by deleting less relevant received paths or by considering only the more relevant received paths.

In an embodiment the determination module is also configured to determine at least two predetermined channel impulse responses, included in a database, that most likely correspond with the estimated channel impulse response. The second memory also comprises a combination module configured to combine together at least two of the location associated with the predetermined channel impulse responses.

Another embodiment comprises a system that comprises a base station comprising one or more first processor(s), I/O interface(s), and a first memory coupled to the processor(s). The first processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The system also comprises at least one core network device. A database of channel impulse responses is stored in the core network or cloud. Every estimated channel impulse response is compared with the channel impulse response database to find the best match. The localization server in the core network does the location calculation. This core network device comprises one or more second processor(s), I/O interface(s), and a second memory coupled to the first processor(s). The first processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the first and second processors may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The first and second memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The first memory includes a first estimation module adapted to the estimation of at least one channel impulse response of a propagation channel between the user device and the base station.

The second memory includes different modules. These modules comprise a determination module adapted to the determination of a predetermined channel impulse response, included in a database, which most likely corresponds with the estimated channel impulse response, the determination is made using a pattern matching techniques and each predetermined channel impulse response is associated with a location. The memory of the core network device includes also comprise a second estimation module adapted to the estimation of the location of the user device as being the location associated with the predetermined channel impulse response.

In an embodiment the first or second memory also comprises a modelization module configured to model the predetermined channel impulse response by a predetermined number of received paths, at least one path is characterized by a time delay a magnitude and/or a phase, and eventually a compression module configured to compress the model by deleting less relevant received paths or by considering only the more relevant received paths.

In an embodiment the determination module is also configured to determine at least two predetermined channel impulse responses, included in a database, that most likely correspond with the estimated channel impulse response. The second memory also comprises a combination module configured to combine together at least two of the location associated with the predetermined channel impulse responses.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for localizing a user device described figure 1 can be performed by programmed computers. The user device is located under coverage or at least in the vicinity of at least one base station of a wireless network. The localization method comprises:

> a step 101 of estimating at least one channel impulse response of a propagation channel between the user device and the base station,
> a step 102 of determining a predetermined channel impulse response, included in a database, that most likely corresponds with the estimated channel impulse response , the determination is made using a pattern matching techniques and each predetermined channel impulse response is associated with a location,
> a step 103 of estimating the location of the user device as being the location associated with the predetermined channel impulse response.

**Claims**

1. A method to localize a user device, the user device is located in the vicinity of at least one base station of a wireless network, the localization method comprises:

    > a step (101) of estimating at least one channel impulse response of a propagation channel between the user device and the base station,
    > a step (102) of determining a predetermined channel impulse response, included in a database, that most likely corresponds with the estimated channel impulse response , the determination is made using a pattern matching techniques and each predetermined channel impulse response is associated with a location,
a step (103) of estimating the location of the user device as being the location associated with the predetermined channel impulse response.

2. The localization method as claimed in claim 1, further comprises a step (201) of creating the data base;
by performing in field measurements of the channel impulse response in at least one point of the coverage area of the base station and/or
by modeling the predetermined channel impulse responses using ray tracing techniques and/or
by determining the channel impulse response in at least one point of the coverage area of the base station, the determination is realized by one of the user devices and after that the determined channel impulse response is transmitted to the base station.

3. The localization method as claimed in claim 1 or 2 further comprises:

    > a step (301) of modeling the predetermined channel impulse response by a predetermined number of received paths, at least one path is **characterized by** a time delay a magnitude and/or a phase,
    > and eventually a step (401) of compressing the model by deleting less relevant received paths and/or by considering only the more relevant received paths.

4. The localization method as claimed in any of the preceding claims wherein the step (102) of determining a predetermined channel impulse response is also configured to compare the estimated channel impulse response with only a subset of the database, the subset of the database is determined using an identification of at least one neighbor cell and/or a received power of a reference signal transmitted by at least one neighbor cell.

5. The localization method as claimed in any of the preceding claims wherein the step (102) of determining a predetermined channel impulse response is also configured to use previous location of the user device and previously estimated channel impulse responses.

6. The localization method as claimed in any of the preceding claims wherein the step (102) of determining a predetermined channel impulse response is also configured to determine at least two predetermined channel impulse responses, included in a database, that most likely correspond with the estimated channel impulse response,
the localization method also comprising a step (601) of combining together at least two of the location associated with the predetermined channel impulse responses.

7.  The localization method as claimed in any of the preceding claims comprises a further step of updating the predetermined channel impulse responses database with a new entry which is the user device estimated channel impulse response associated with its estimated location, the step of updating the data base is realized once the user device location is estimated.

8.  A base station that comprises:

    at least one processor and at least one memory coupled to the processor,
    the memory comprising;
    a first estimation module configured to the estimation of at least one channel impulse response of a propagation channel between a user device and the base station,
    a determination module configured to the determination of a predetermined channel impulse response, included in a database, that most likely corresponds with the estimated channel impulse response , the determination is made using a pattern matching techniques and each predetermined channel impulse response is associated with a location,
    a second estimation module configured to the estimation of the location of the user device as being the location associated with the predetermined channel impulse response.

9.  The base station according to the claim 8 wherein the memory also comprises a modelization module configured to model the predetermined channel impulse response by a predetermined number of received paths, at least one path is **characterized by** a time delay a magnitude and/or a phase, and eventually a compression module configured to compress the model by deleting less relevant received paths or by considering only the more relevant received paths.

10. The base station according to the claim 8 or 9 wherein the determination module is also configured to determine at least two predetermined channel impulse responses, included in a database, that most likely correspond with the estimated channel impulse response,
    The memory also comprises a combination module configured to combine together at least two of the location associated with the predetermined channel impulse responses.

11. A system to localize a user device, the system comprises:

    at least one base station comprising at least one first processor and at least one first memory coupled to the first processor,
    a core network device comprising at least one second processor and at least one second memory coupled to the second processor,
    the first memory comprising;
    a first estimation module configured to the estimation of at least one channel impulse response of a propagation channel between the user device and the base station,
    the second memory comprising;
    a determination module configured to the determination of a predetermined channel impulse response, included in a database, that most likely corresponds with the estimated channel impulse response , the determination is made using a pattern matching techniques and each predetermined channel impulse response is associated with a location,
    a second estimation module configured to the estimation of the location of the user device as being the location associated with the predetermined channel impulse response.

12. The system according to the claim 11 wherein the first or second memory also comprises a modelization module configured to model the predetermined channel impulse response by a predetermined number of received paths, at least one path is **characterized by** a time delay a magnitude and/or a phase, and eventually a compression module configured to compress the model by deleting less relevant received paths or by considering only the more relevant received paths.

13. The system according to the claim 11 or 12 wherein the determination module is also configured to determine at least two predetermined channel impulse responses, included in a database, that most likely correspond with the estimated channel impulse response,
    The second memory also comprises a combination module configured to combine together at least two of the location associated with the predetermined channel impulse responses.

14. A computer-readable medium having embodied thereon a computer program for executing a method to localize a user device, the user device is located in the vicinity of at least one base station of a wireless network, the localization method comprises:

    a step (101) of estimating at least one channel impulse response of a propagation channel between the user device and the base station,
    a step (102) of determining a predetermined channel impulse response, included in a database, that most likely corresponds with the estimated channel impulse response , the determination is made using a pattern matching techniques and each predetermined channel impulse response is associated with a location,
a step (103) of estimating the location of the user device as being the location associated with the predetermined channel impulse response.

**Amended claims in accordance with Rule 137(2) EPC.**

1. A method to localize a user device, the user device is located in the vicinity of at least one base station of a wireless network, the localization method comprises:

   a step (101) of estimating at least one channel impulse response of a propagation channel between the user device and the base station,
   a step (102) of determining a predetermined channel impulse response, included in a database, that most likely corresponds with the estimated channel impulse response , the determination is made using a pattern matching techniques and each predetermined channel impulse response is associated with a location,
   a step (103) of estimating the location of the user device as being the location associated with the predetermined channel impulse response,
   the method is **characterized in that** the step (102) of determining a predetermined channel impulse response is also configured:

   • to use at least two previous locations of the user device and previously estimated channel impulse responses and,
   • to determine a first distance between the two previous locations and,
   • to determine at least two possible predetermined channel impulse response, included in a database, that most likely corresponds with the estimated channel impulse response and
   • to determine at least two second distances,

   ∘ one of the second distance being between a most recent of the two previous locations and a location associated to one of the two possible predetermined channel impulse response and
   ∘ the other second distance being between the most recent of the two previous locations and a location associated to the other two possible predetermined channel impulse response,

the step (102) of determining a predetermined channel impulse response, is also configured to choose the predetermined channel impulse response based on the second distances and the first distance.

2. The localization method as claimed in claim 1, further comprises a step (201) of creating the data base;
   by performing in field measurements of the channel impulse response in at least one point of the coverage area of the base station and/or
   by modeling the predetermined channel impulse responses using ray tracing techniques and/or
   by determining the channel impulse response in at least one point of the coverage area of the base station, the determination is realized by one of the user devices and after that the determined channel impulse response is transmitted to the base station.

3. The localization method as claimed in any of the preceding claims wherein the step (102) of determining a predetermined channel impulse response is also configured to compare the estimated channel impulse response with only a subset of the database, the subset of the database is determined using an identification of at least one neighbor cell and/or a received power of a reference signal transmitted by at least one neighbor cell.

4. The localization method as claimed in any of the preceding claims wherein the step (102) of determining a predetermined channel impulse response is also configured to determine at least two predetermined channel impulse responses, included in a database, that most likely corresponds with the estimated channel impulse response,
   the localization method also comprising a step (601) of combining together at least two of the location associated with the predetermined channel impulse responses.

5. The localization method as claimed in any of the preceding claims comprises a further step of updating the predetermined channel impulse responses database with a new entry which is the user device estimated channel impulse response associated with its estimated location, the step of updating the data base is realized once the user device location is estimated.

6. A base station that comprises:

   at least one processor and at least one memory coupled to the processor, the memory comprising;
   a first estimation module configured to the estimation of at least one channel impulse response of a propagation channel between a user device and the base station,

a determination module configured to the determination of a predetermined channel impulse response, included in a database, that most likely corresponds with the estimated channel impulse response , the determination is made using a pattern matching techniques and each predetermined channel impulse response is associated with a location, a second estimation module configured to the estimation of the location of the user device as being the location associated with the predetermined channel impulse response. the base station is **characterized in that** the determination module is also configured:

- to use at least two previous locations of the user device and previously estimated channel impulse responses and,
- to determine a first distance between the two previous locations and,
- to determine at least two possible predetermined channel impulse response, included in a database, that most likely corresponds with the estimated channel impulse response and
- to determine at least two second distances,

  ◦ one of the second distance being between a most recent of the two previous locations and a location associated to one of the two possible predetermined channel impulse response and
  ◦ the other second distance being between the most recent of the two previous locations and a location associated to the other two possible predetermined channel impulse response,

the determination module is also configured to choose the predetermined channel impulse response based on the second distances and the first distance.

7. The base station according to the claim 6 wherein the determination module is also configured to determine at least two predetermined channel impulse responses, included in a database, that most likely correspond with the estimated channel impulse response,
The memory also comprises a combination module configured to combine together at least two of the location associated with the predetermined channel impulse responses.

8. A system to localize a user device, the system comprises:

at least one base station comprising at least one first processor and at least one first memory coupled to the first processor, a core network device comprising at least one second processor and at least one second memory coupled to the second processor, the first memory comprising; a first estimation module configured to the estimation of at least one channel impulse response of a propagation channel between the user device and the base station, the second memory comprising; a determination module configured to the determination of a predetermined channel impulse response, included in a database, that most likely corresponds with the estimated channel impulse response , the determination is made using a pattern matching techniques and each predetermined channel impulse response is associated with a location, a second estimation module configured to the estimation of the location of the user device as being the location associated with the predetermined channel impulse response. the system is **characterized in that** the determination module is also configured:

- to use at least two previous locations of the user device and previously estimated channel impulse responses and,
- to determine a first distance between the two previous locations and,
- to determine at least two possible predetermined channel impulse response, included in a database, that most likely corresponds with the estimated channel impulse response and
- to determine at least two second distances,

  ◦ one of the second distance being between a most recent of the two previous locations and a location associated to one of the two possible predetermined channel impulse response and
  ◦ the other second distance being between the most recent of the two previous locations and a location associated to the other two possible predetermined channel impulse response,

the determination module is also configured to choose the predetermined channel impulse response based on the second distances and the first distance.

9. The system according to the claim 8 wherein the determination module is also configured to determine at least two predetermined channel impulse responses, included in a database, that most likely correspond with the estimated channel impulse response,

The second memory also comprises a combination module configured to combine together at least two of the location associated with the predetermined channel impulse responses.

**10.** A computer-readable medium having embodied thereon a computer program for executing a method to localize a user device, the user device is located in the vicinity of at least one base station of a wireless network, the localization method comprises:

a step (101) of estimating at least one channel impulse response of a propagation channel between the user device and the base station,
a step (102) of determining a predetermined channel impulse response, included in a database, that most likely corresponds with the estimated channel impulse response , the determination is made using a pattern matching techniques and each predetermined channel impulse response is associated with a location,
a step (103) of estimating the location of the user device as being the location associated with the predetermined channel impulse response,
the computer-readable medium is **characterized in that** the step (102) of determining a predetermined channel impulse response is also configured:

• to use at least two previous locations of the user device and previously estimated channel impulse responses and,
• to determine a first distance between the two previous locations and,
• to determine at least two possible predetermined channel impulse response, included in a database, that most likely corresponds with the estimated channel impulse response and
• to determine at least two second distances,

∘ one of the second distance being between a most recent of the two previous locations and a location associated to one of the two possible predetermined channel impulse response and
o the other second distance being between the most recent of the two previous locations and a location associated to the other two possible predetermined channel impulse response,

the step (102) of determining a predetermined channel impulse response, is also configured to choose the predetermined channel impulse response based on the second distances and the first distance.

101 Estimating CIR

102 Matching CIR
with data base

103 Estimating
localization

Figure 1

201 → Creating data base

101 → Estimating CIR

102 → Matching CIR with data base

103 → Estimating localization

Figure 2

201     Creating data base

101     Estimating CIR

102     Matching CIR with data base

301     Modeling CIR

103     Estimating localization

Figure 3

201 — Creating data base

101 — Estimating CIR

102 — Matching CIR with data base

301 — Modeling CIR

401 — Compressing CIR

103 — Estimating localization

Figure 4

Figure 5

201 — Creating data base

101 — Estimating CIR

102 — Matching CIR with data base

103 — Estimating first localization

103.bis — Estimating second localization

Combining localization — 601

Figure 6

UE       eNodeB       localization algorithm

701    702

Uplink reference signal

Channel estimation

CIR fingerprint database

Figure 7

Europäisches
Patentamt

European
Patent Office

Office européen
des brevets

**EUROPEAN SEARCH REPORT**

Application Number

EP 14 30 5563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/172007 A1 (WAX MATI [IL] ET AL) 4 July 2013 (2013-07-04) <br> * abstract * <br> * paragraphs [0002], [0006] - [0014], [0018] - [0020], [0064] - [0068] * <br> * claims 1-9 * <br> * figures 1A,1B,3 * <br> ----- | 1-14 | INV. <br> H04W64/00 <br> G01S5/02 |
| X | EP 0 892 278 A2 (FORSVARETS FORSKNINGS [NO]) 20 January 1999 (1999-01-20) <br> * column 2, line 1 - column 4, line 11 * <br> * claims 1-13 * <br> * figures 1,2 * <br> ----- | 1-14 | |
| X | WO 2005/032189 A1 (UNIV QUEBEC EN ABITIBI TEMISCA [CA]; NERGUIZIAN CHAHE [CA]; DESPINS CH) 7 April 2005 (2005-04-07) <br> * page 1, line 1 - line 13 * <br> * page 3, line 1 - line 5 * <br> * page 5, line 21 - page 6, line 17 * <br> * page 7, line 6 - line 13 * <br> * page 9, lines 9-11 * <br> * page 10, line 9 - page 16, line 14 * <br> * page 22, line 1 - line 13 * <br> * page 23, line 3 - line 7 * <br> * claims 1,10-18,23,33,37-42,53-59 * <br> * figures 1-4 * <br> ----- <br><br> -/-- | 1-14 | TECHNICAL FIELDS SEARCHED (IPC) <br><br> G01S <br> H04W |

The present search report has been drawn up for all claims

| Place of search | Date of completion of the search | Examiner |
|---|---|---|
| Berlin | 16 September 2014 | Rosken, Wilfried |

EPO FORM 1503 03.82 (P04C01)

**EP 2 934 052 A1**

Europäisches
Patentamt
European
Patent Office
Office européen
des brevets

# EUROPEAN SEARCH REPORT

Application Number

EP 14 30 5563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NERGUIZIAN C ET AL: "Geolocation in Mines With an Impulse Response Fingerprinting Technique and Neural Networks", IEEE TRANSACTIONS ON WIRELESS COMMUNICATIONS, IEEE SERVICE CENTER, PISCATAWAY, NJ, US, vol. 5, no. 3, 1 March 2006 (2006-03-01), pages 603-611, XP001545726, ISSN: 1536-1276, DOI: 10.1109/TWC.2006.03017 * abstract * * chapter II, II B-C, III, III A-C, IV, V * ----- | 1-14 | |
| X | CA 2 442 950 A1 (UNIV D OTTAWA [CA]; UNIV LAVAL [CA]; UNIV QUEBEC EN ABITIBI TEMISCA [C) 26 March 2005 (2005-03-26) * abstract * * page 5, line 18 - page 10, line 9 * * page 11, line 1 - line 33 * * page 13, line 16 - line 22 * * page 14, line 5 - line 10 * * page 15, line 10 - page 16, line 7 * * page 17, line 5 - line 16 * * page 22, line 13 - page 23, line 6 * * claims 1,2 * * figures 1(b),2,5(b),6 * ----- -/-- | 1-14 | TECHNICAL FIELDS SEARCHED (IPC) |

The present search report has been drawn up for all claims

| Place of search | Date of completion of the search | Examiner |
|---|---|---|
| Berlin | 16 September 2014 | Rosken, Wilfried |

EPO FORM 1503 03.82 (P04C01)

**EUROPEAN SEARCH REPORT**

Application Number

EP 14 30 5563

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAHE NERGUIZIAN ET AL: "Neural network and fingerprinting-based geolocation on time-varying channels", PERSONAL, INDOOR AND MOBILE RADIO COMMUNICATIONS, 2006 IEEE 17TH INTERNATIONAL SYMPOSIUM ON, IEEE, PI, 1 September 2006 (2006-09-01), pages 1-6, XP031023381, DOI: 10.1109/PIMRC.2006.254432 ISBN: 978-1-4244-0329-5 * chapters I, II A-C, IV * | 1-14 | |
| X | CHAHE NERGUIZIAN ET AL: "Indoor Fingerprinting Geolocation using Wavelet-Based Features Extracted from the Channel Impulse Response in Conjunction with an Artificial Neural Network", INDUSTRIAL ELECTRONICS, 2007. ISIE 2007. IEEE INTERNATIONAL SYMPOSIUM ON, IEEE, PI, 1 June 2007 (2007-06-01), pages 2028-2032, XP031156455, ISBN: 978-1-4244-0754-5 * abstract * * chapters I, II A-B, III, IV, V * | 1-14 | TECHNICAL FIELDS SEARCHED (IPC) |
| X | US 2011/171993 A1 (KIM KANGHEE [KR] ET AL) 14 July 2011 (2011-07-14) * abstract * * paragraphs [0008] - [0029] * * paragraphs [0039] - [0071] * * claims 1-20 * * figures 1-7 * | 1-14 | |
| X | US 2013/172020 A1 (AWEYA JAMES [AE] ET AL) 4 July 2013 (2013-07-04) * abstract * * sentences 6-21,27-40,47-54,139-146 * * figures 1b,2 * | 1-14 | |

The present search report has been drawn up for all claims

| Place of search | Date of completion of the search | Examiner |
|---|---|---|
| Berlin | 16 September 2014 | Rosken, Wilfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 14 30 5563

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2014

| Patent document cited in search report | | Publication date | Patent family member(s) | | Publication date |
|---|---|---|---|---|---|
| US 2013172007 | A1 | 04-07-2013 | NONE | | |
| EP 0892278 | A2 | 20-01-1999 | EP | 0892278 A2 | 20-01-1999 |
| | | | NO | 973275 A | 18-01-1999 |
| WO 2005032189 | A1 | 07-04-2005 | AU | 2004305877 A1 | 07-04-2005 |
| | | | CA | 2540152 A1 | 07-04-2005 |
| | | | US | 2007010956 A1 | 11-01-2007 |
| | | | WO | 2005032189 A1 | 07-04-2005 |
| CA 2442950 | A1 | 26-03-2005 | NONE | | |
| US 2011171993 | A1 | 14-07-2011 | NONE | | |
| US 2013172020 | A1 | 04-07-2013 | US | 2013172020 A1 | 04-07-2013 |
| | | | WO | 2013098549 A1 | 04-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. J. FORTUNE ; D. H. GAY ; B. W. KERNIGHAN ; O.LANDRON ; M. H. WRIGHT ; R.A. VALENZUELA.** WiSE Design of Indoor Wireless Systems: Practical Computation and Optimization. *IEEE Computational Science and Engineering,* March 1995

- **V. ERCEG ; S. J. FORTUNE ; J. LING ; A. J. RUSTAKO ; R. A.VALENZUELA.** Comparisons of a Computer-Based Propagation Prediction Tool with Experimental Data Collected in Urban Microcellular Environments. *IEEE Journal on Select Areas in Communication,* May 1997, vol. 15 (4

- **D. CHIZHIK ; J. LING ; R.A.VALENZUELA.** Radio Wave Diffusion Indoors and Throughput Scaling with Cell Density. *IEEE Trans. on Wireless Communications,* September 2012

- **D. CHIZHIK ; L. DRABECK ; W. M. MACDONALD.** Propagation Over Parabolic Terrain: Asymptotics And Comparison To Data. *IEEE Transactions on Antennas and Propagation,* June 2010

- **D. CHIZHIK ; J.LING.** Propagation over Clutter: Physical Stochastic Model. *IEEE Transactions on Antennas and Propagation,* April 2008, vol. 56 (4), 1071-1077